Europäisches Patentamt

European Patent Office

Office européen des brevets

(19)

(11) Numéro de publication : **0 318 407 B1**

(12)

# FASCICULE DE BREVET EUROPEEN

(45) Date de publication du fascicule du brevet :
**10.06.92 Bulletin 92/24**

(51) Int. Cl.⁵ : **A01D 78/12**

(21) Numéro de dépôt : **88440095.3**

(22) Date de dépôt : **15.11.88**

(54) **Machine de fenaison avec au moins une roue râteleuse équipée de bras porte-outils commandés.**

(30) Priorité : **17.11.87 FR 8716048**
**16.06.88 FR 8808339**

(43) Date de publication de la demande :
**31.05.89 Bulletin 89/22**

(45) Mention de la délivrance du brevet :
**10.06.92 Bulletin 92/24**

(84) Etats contractants désignés :
**AT CH DE ES FR GB IT LI NL**

(56) Documents cités :
**DE-A- 2 833 814**
**DE-A- 3 601 213**

(56) Documents cités :
**DE-A- 3 628 604**
**FR-A- 2 093 488**
**FR-A- 2 380 718**
**FR-A- 2 415 955**

(73) Titulaire : **KUHN S.A.**
**4, Impasse des Fabriques**
**F-67700 Saverne (FR)**

(72) Inventeur : **Aron, Jérôme**
**12, rue de la Forêt Dossenheim Sur Zinsel**
**F-67330 Bouxwiller (FR)**

(74) Mandataire : **Andres, Jean-Claude**
**KUHN S.A. 4, Impasse des Fabriques**
**F-67700 Saverne (FR)**

EP 0 318 407 B1

## Description

La présente invention se rapporte à une machine de fenaison comportant notamment un châssis avec au moins une roue râteleuse équipée de bras porte-outils dirigés vers l'extérieur, laquelle roue râteleuse est guidée en rotation sur un axe support qui est sensiblement vertical et qui est relié par un moyen de liaison à au moins un appui pouvant se déplacer sur le sol, cet appui étant décalé par rapport audit axe support dans le sens de déplacement, lequel axe support est muni d'une came qui commande lesdits bras porte-outils par l'intermédiaire de galets qui sont reliés à ces derniers, de telle sorte que lors de leur rotation autour de l'axe support ils pivotent autour de leurs axes longitudinaux respectifs afin qu'ils lèvent les outils de travail dans une certaine zone de leur trajectoire, en vue de la dépose des produits râtelés sous la forme d'un andain.

Sur des machines de fenaison connues (FR-A-2 380 718), l'axe support de la roue râteleuse et la came de commande sont bloqués par rapport au châssis durant le travail. Les bras porte-outils sont alors commandés par la came, de telle sorte qu'ils soulèvent leurs outils constamment dans la même zone par rapport au châssis de la machine. Ce genre de machine permet de constituer des andains bien formés lorsqu'elle est déplacée en ligne droite. Cependant, dans les courbes ou virages, les andains constitués sont irréguliers et très souvent disloqués. Le ramassage des produits avec un outil de reprise tel qu'une presse ou une ensileuse est alors difficile à effectuer.

Sur d'autres machines, connues dans la demande de brevet FR-A-2 415 955, qui divulgue le préambule de la revendication 1, la roue râteleuse comporte une came de commande qui est bloquée durant le travail, mais peut néanmoins être amenée dans deux positions différentes. Pour cela on peut libérer ladite came et la tourner d'un angle d'environ 180° avant de l'immobiliser dans la nouvelle position. la zone de dépose des produits peut ainsi se situer sur le côté droit ou le côté gauche de la machine. Ce réglage permet d'augmenter les possibilités d'utilisation d'une même machine. celle-ci peut en effet être tirée ou poussée au moyen du tracteur. l'utilisateur pourra ainsi choisir le mode de travail en fonction de la nature des produits et des terrains sur lesquels il travaille.

Toutefois, ledit réglage ne permet pas non plus à la machine de confectionner des andains bien formés et réguliers à la fois dans les lignes droites et les courbes et/ou virages. En sus, le réglage de la came de commande est un facteur de perte de temps surtout s'il doit être répété souvent.

Sur d'autres machines, connues dans la demande de brevet DE-A-2 833 814, l'axe support qui porte la came de commande est fixe dans la roue râteleuse. Cette roue râteleuse est articulée au châssis au moyen d'un axe d'articulation qui est placé à l'avant de l'axe support. Toute la roue râteleuse peut être déplacée manuellement autour de cet axe d'articulation afin que la machine puisse être utilisée à l'avant ou à l'arrière d'un tracteur. Ce déplacement nécessite cependant le démontage de plusieurs pièces pour libérer la roue râteleuse. Il ne peut donc pas s'effectuer automatiquement. Dans chacune desdites positions, la roue râteleuse ne peut pivoter autour de l'axe d'articulation que dans un secteur relativement limité. Par conséquent, dans chaque position, la machine ne peut être déplacée, au moyen du tracteur, que dans une seule direction

La présente invention a pour but de proposer une machine de fenaison servant notamment à l'andainage, quine comporte pas les inconvénients précités des machines connues

A cet effet, une importante caractéristique de l'invention consiste en ce que l'axe support qui porte la came de commande et l'appui est libre en rotation par rapport au châssis de manière à pouvoir tourner autour de son axe géométrique et que l'appui est fixe par rapport au moyen de liaison dans le plan horizontal.

Dans cet agencement, l'appui se place constamment derrière l'axe support et s'oriente automatiquement dans la direction de déplacement de la machine durant le travail. Par conséquent, ledit appui oriente aussi la came de commande par l'intermédiaire de l'axe support de la roue râteleuse. La came est alors constamment positionnée de telle sorte que le ramassage des produits couchés sur le sol s'effectue sur la moitié avant -vu dans la direction de déplacement- de la trajectoire des outils de travail, et que la dépose de ces produits ait lieu dans le voisinage d'un plan perpendiculaire à la direction de déplacement et passant par l'axe support de la roue râteleuse. Ce positionnement de la came de commande permet d'obtenir des andains bien formés à la fois dans les lignes droites et les virages.

Ledit appui solidaire de l'axe support de la roue râteleuse assure aussi automatiquement un pivotement d'environ 180° de la came de commande dans le cas où la même machine est utilisée à la fois comme une machine tirée et comme une machine poussée. De ce fait, il n'y aucune perte de temps pour passer d'un de ces modes de travail dans l'autre, ce qui est particulièrement avantageux lorsque la machine est déplacée alternativement en marche avant et en marche arrière, pour éviter de faire demi-tour en bout de terrain.

Une autre caractéristique de l'invention consiste en ce que l'un au moins des appuis de la roue râteleuse est disposé de telle sorte que durant le travail il exerce un couple sur l'axe support avec la came de commande qui est sensiblement égal et opposé au couple exercé par les galets des bras porte-outils sur ladite came de commande. Cette caractéristique permet d'améliorer le guidage assuré par l'appui qui se déplace sur le sol. Selon un mode de réalisation très avantageux, l'appui qui règle la position de l'axe support et de la came de commande est en sus décalé latéralement par rapport à un plan vertical dirigé dans la direction de déplacement et passant par l'axe support. Ledit appui se situe sur le côté vers lequel se déplacent les bras porte-outils lorsqu'ils passent à travers ledit plan dans la moitié arrière de leur trajectoire.

Grâce à ce décalage latéral on crée au travail un couple opposé au couple exercé sur la came de commande et l'axe support par les galets des bras porte-outils. La valeur du décalage latéral est choisie de manière à obtenir l'équilibre entre les moments des deux couples.

Cet équilibre favorise le guidage assuré par l'appui au sol. Le couple exercé par les galets des bras porte-outils sur la came de commande n'influence plus sur ce guidage. De ce fait, l'appui déplace l'axe support et ladite came aussi facilement à l'encontre du sens de rotation des bras porte-outils que dans ledit sens.

Par ailleurs, ledit guidage est aussi moins tributaire de la surface du sol. Grâce à l'équilibre entre les couples, les galets des bras porte-outils ne provoquent pas un déplacement intempestif de la came de commande dès que la pression de l'appui sur le sol diminue un court instant. Ainsi le positionnement de la came de commande est correctement assuré même dans les terrains comportant des dénivellations à leur surface.

D'autres caractéristiques et avantages de l'invention ressortiront des autres revendications et de la description ci-après d'exemples de réalisation non limitatifs de l'invention, avec référence aux dessins annexés dans lesquels :
– La figure 1 représente une vue de dessus d'une machine selon l'invention,
– La figure 2 représente à plus grande échelle une coupe simplifiée de la roue râteleuse de la figure 1,
– La figure 3 représente une vue de dessus d'une machine selon l'invention déplacée dans le sens inverse du sens de déplacement de la machine selon la figure 1,
– La figure 4 représente une vue de dessus d'une variante de réalisation de la machine selon l'invention,
– La figure 5 représente, à plus grande échelle, une coupe de la roue râteleuse de la figure 4.

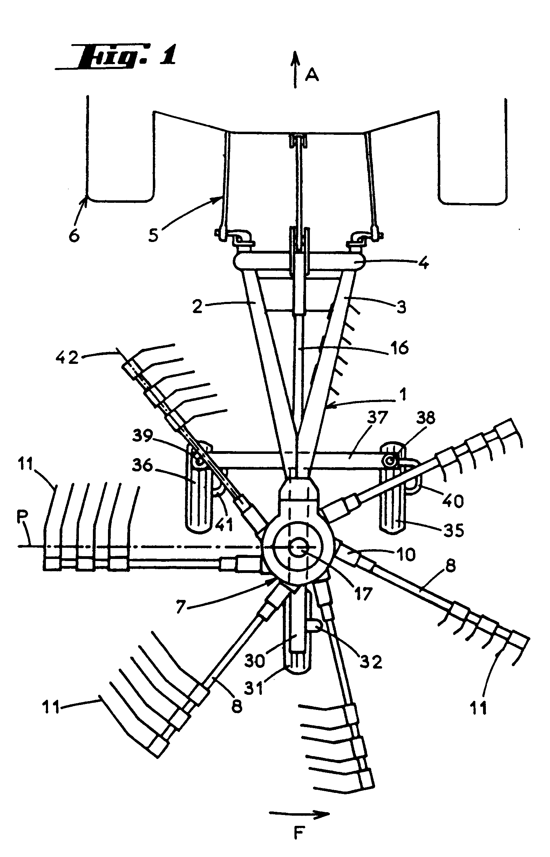

Telle qu'elle est représentée sur la figure 1, la machine selon l'invention comporte un châssis (1). Celui-ci est constitué notamment par deux poutres (2, 3) sensiblement horizontales. Les extrémités avant de ces poutres (2, 3) sont reliées à un chevalet d'attelage trois points (4) pouvant être accouplé au dispositif de relevage (5) d'un tracteur d'entraînement (6) qui est simplement esquissé sur cette figure 1.

Les deux autres extrémités des poutres (2, 3) sont reliées à une roue râteleuse (7) équipée de bras porte-outils (8).

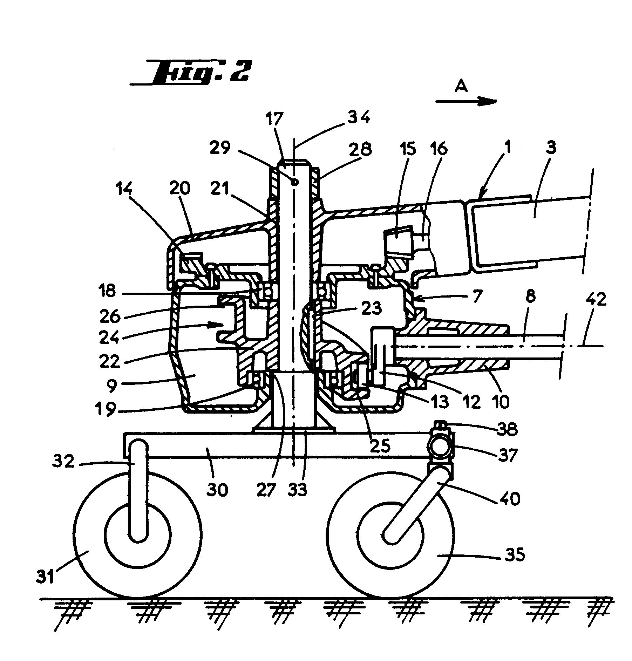

Il ressort notamment de la figure 2 que cette roue râteleuse (7) possède un boîtier central (9) ou analogue. Ce boîtier (9) comporte à sa périphérie des paliers (10) dans lesquels sont logés les bras porte-outils (8) dirigés vers l'extérieur. Chacun de ces bras (8) porte à son extrémité extérieure des outils (11) constitués par des dents de râtelage. L'extrémité intérieure de chaque bras (8) débouche dans le boîtier (9) et comporte une manivelle (12) munie d'un galet (13).

Ce boîtier (9) comporte à sa partie supérieure une couronne dentée (14) qui est en prise avec un pignon (15) solidaire d'un arbre d'entraînement (16). Il est par ailleurs guidé en rotation sur un axe support sensiblement vertical (17) au moyen de roulements à billes (18, 19). Au-dessus du boîtier (9) est prévu un couvercle fixe (20) solidaire des poutres (2, 3) du châssis (1). Ce couvercle (20) protège la couronne dentée (14) et le pignon (15) précités. Il comporte un logement (21) dans lequel est guidé l'axe support (17) de sorte qu'il soit libre en rotation autour de son axe géométrique (34). Pour cela il peut y être logé avec un léger jeu radial. Un ou plusieurs organes de guidage tels que des bagues, peuvent éventuellement être prévus dans ledit logement (21) en vue de guider ledit axe support (17).

L'axe support (17) porte sur sa partie située dans le boîtier (9) une came de commande (22) pour les bras porte-outils (8). Cette came (22) est fixée à l'axe support (17) au moyen d'une clavette (23). Elle présente un chemin de guidage (24) dans lequel se déplacent les galets (13) des bras porte-outils (8). Ce chemin de guidage est sensiblement circulaire et comporte une portion basse (25) et une portion plus élevée (26).

Ledit axe support (17) est bloqué en translation par rapport au châssis (1). Ceci est obtenu au moyen d'un épaulement (27) qui bute contre une face inférieure de la came de commande (22) et, d'une bague d'arrêt (28) fixée à l'extrémité supérieure de l'axe au moyen d'une goupille (29). L'extrémité inférieure de l'axe support (17) est reliée à l'aide d'un bras de liaison (30) à au moins un appui (31) qui repose sur le sol. Cet appui (31) est décalé vers l'arrière par rapport audit axe (17) -vu dans le sens d'avancement A- et est fixe par rapport au moyen de liaison (30) dans le plan horizontal. Dans l'exemple représenté, l'appui (31) est constitué par une roulette qui roule sur le sol durant le travail. Cette roulette (31) est rattachée au bras de liaison (30) par une colonne (32). Ce bras de liaison est lui-même fixé par exemple à l'aide de boulons sur une plaque (33) solidaire de l'axe support (17).

Il ressort de l'agencement décrit ci-avant que l'axe support (17), la came de commande (22) et l'appui (31) sont liés rigidement entre eux et forment un ensemble pouvant pivoter autour de l'axe géométrique longitudinal (34) dudit axe support (17).

Deux appuis supplémentaires (35 et 36) sont encore liés à l'axe support (17) afin d'augmenter la stabilité de la machine et d'améliorer l'adaptation aux dénivellations du sol. Par rapport à cet axe (17), ces deux appuis (35, 36) se situent sur le côté opposé à celui sur lequel se situe l'appui (31) précité (voir notamment la figure 2). Ils sont parallèles entre eux et se situent à une certaine distance l'un de l'autre. Leur liaison avec l'axe support (17) est assurée par le bras (30) précité qui passe sous ledit axe (17) et qui porte à son extrémité un bras transversal (37) auquel sont reliés ces appuis (35, 36) de manière à pouvoir pivoter dans un plan horizontal. A cet effet, ledit bras transversal (37) comporte près de chacune de ses extrémités un axe de pivotement sensiblement vertical (38 et 39) auquel est relié l'appui (35 ou 36) correspondant, au moyen d'une colonne (40, 41) inclinée vers l'arrière. Ces deux appuis supplémentaires (35, 36) sont également constitués par des roulettes. Ces appuis (31, 35, 36) pourraient aussi être constitués par des galets ou des patins glissant sur le sol.

Durant le travail, la machine selon la figure 1 est tirée au moyen du tracteur (6) dans la direction A. Le boîtier (9) est alors entraîné en rotation dans le sens de la flèche F, autour de l'axe support (17). Cet entraînement est assuré au moyen de l'arbre d'entraînement (16) qui est relié d'une manière connue en soi, à l'aide d'un arbre à cardans, à l'arbre de prise de force que comporte le tracteur (6). Durant cette rotation, les galets (13) des bras porte-outils (8) se déplacent dans le chemin de roulement (24) de la came de commande (22). Dans la portion basse (25) de ce chemin (24), les galets (13) maintiennent les bras (8) dans une position dans laquelle leurs outils (11) sont pratiquement verticaux et râtellent les produits étalés sur le sol. Cette zone de râtelage se situe essentiellement dans la partie avant de la trajectoire des outils de travail (11). Dès que lesdits galets (13) s'engagent dans la portion plus élevée (26) de ce chemin de roulement (24), ils font pivoter les bras porte-outils (8) autour de leurs axes géométriques longitudinaux (42) respectifs de sorte qu'ils lèvent leurs outils (11) sur une zone de leur trajectoire. Ces outils (11) pivotent alors vers le haut et déposent les produits râtelés sous la forme d'un andain. Cette zone de dépose se situe essentiellement de part et d'autre d'un plan P perpendiculaire au sens d'avancement A et passant par l'axe support central (17). A la suite de cette zone de dépose, les galets (13) reviennent dans la portion basse (25) et ramènent les bras (8) avec les outils (11) dans la position de râtelage.

Dans cette position de travail, les trois appuis (31, 35, 36) portent la machine. Ils lui confèrent une bonne stabilité et lui permettent de bien suivre les dénivellations du sol. De plus, l'appui (31) se place automatiquement derrière l'axe support (17) en raison de son adhérence et son frottement sur le sol. Les deux appuis (35, 36) qui se situent à l'avant de l'axe support (17) sont guidés par l'appui arrière (31). Cela provient du fait qu'ils peuvent pivoter autour des axes verticaux (38, 39) de leur support (37) et suivent ainsi automatiquement la direction imposée par celui-ci qui est lui-même guidé par l'appui arrière (31).

D'autre part, lorsque le tracteur (6) et la machine entrent dans une courbe ou un virage, l'appui arrière (31) s'oriente suivant la direction de déplacement imposée par le tracteur (6). Simultanément cet appui (31) fait pivoter l'axe support (17) autour de l'axe géométrique longitudinal (34) par l'intermédiaire du bras de liaison (30). Ledit axe support (17) déplace alors automatiquement la came de commande (22) qui est fixée sur lui. Celle-ci est ainsi également constamment orientée en fonction de la direction que suit le tracteur (6). Par conséquent, la zone de dépose où se forme l'andain peut varier par rapport au châssis (1) de la machine afin de demeurer dans le voisinage du plan P qui est perpendiculaire à la direction de déplacement A. Cette zone de dépose reste ainsi constamment à l'emplacement idéal pour la formation d'un andain régulier et non disloqué.

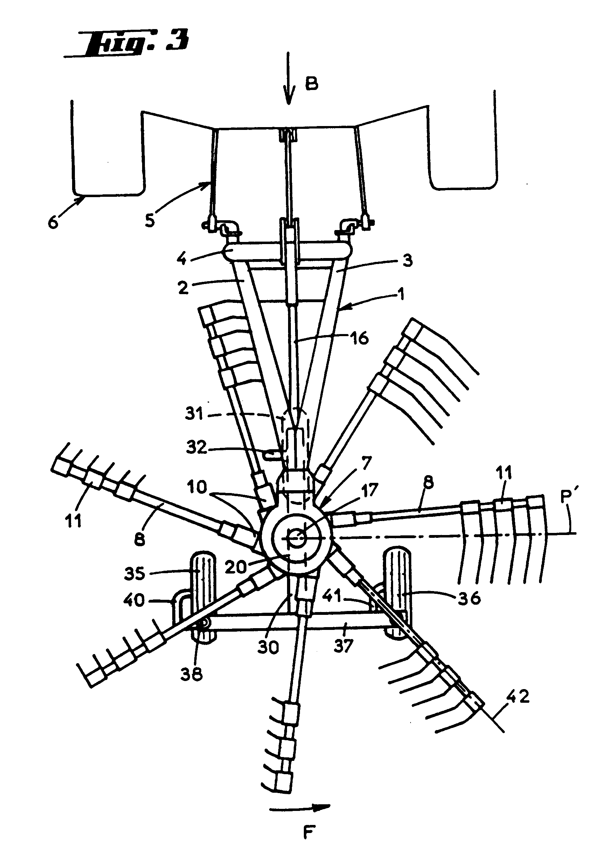

Par ailleurs, si l'utilisateur veut utiliser la machine à l'avant d'un tracteur ou bien en marche arrière pour éviter de faire demi-tour en bout de terrain, il n'a aucun réglage à effectuer. En effet, dès que la machine est poussée, comme cela est représenté sur la figure 3, l'appui fixe (31) se replace automatiquement derrière l'axe support (17) et s'oriente à nouveau dans la direction de déplacement indiquée par la flèche B. Par la même occasion, il fait tourner l'axe support (17) et la came de commande (22) d'un angle d'environ 180°. De cette manière, la zone de ratissage des outils de travail (11) se situe à nouveau dans la partie avant de leur trajectorie et la zone de dépose se situe au voisinage du plan P' perpendiculaire au sens de déplacement B.

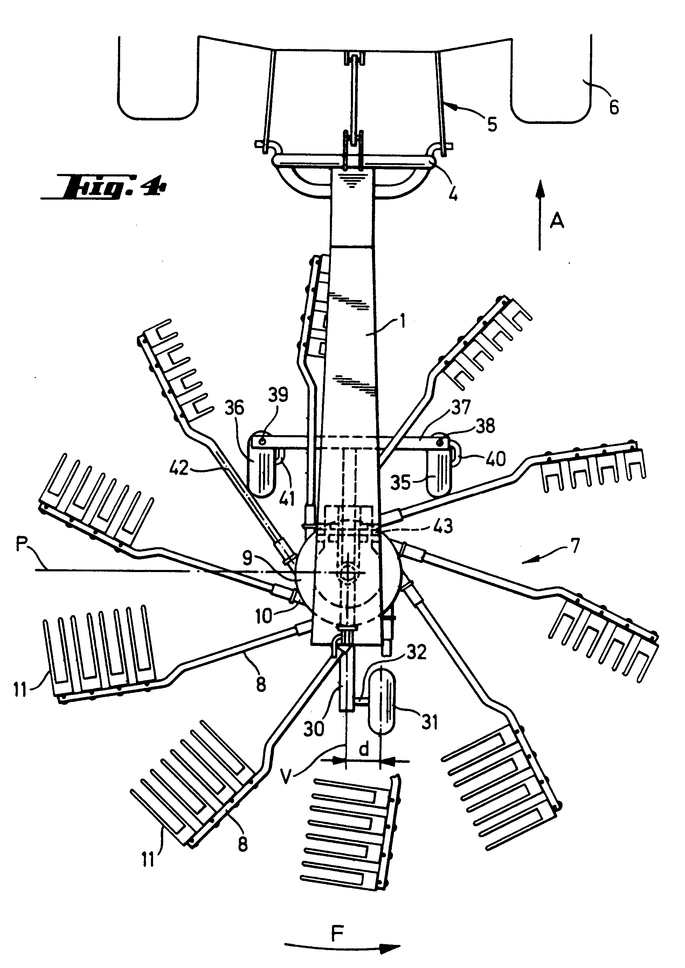

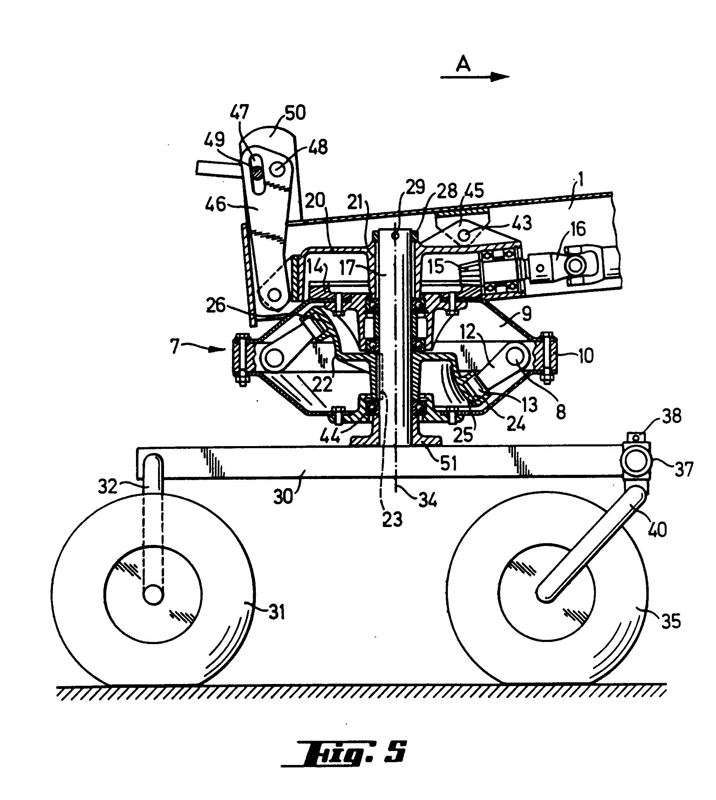

Dans l'exemple de réalisation selon les figures 4 et 5 les pièces communes avec l'exemple précédent sont désignées par les mêmes repères. Ces pièces ne seront plus décrites en détail.

Il ressort de ces figures 4 et 5 que le châssis (1) est constitué par une seule poutre. La roue râteleuse (7) est reliée à l'extrémité arrière du châssis (1) au moyen d'un axe d'articulation (43) sensiblement horizontal. Cet axe (43) se situe à proximité de l'extrémité supérieure de l'axe support (17). Il est solidaire du châssis (1) et passe à travers des orifices aménagés dans deux oreilles (45) prévues sur le couvercle fixe (20). Ce couvercle possède aussi une languette (46) permettant de définir l'ange de pivotement de la roue râteleuse (7) autour de l'axe d'articulation (43). Pour cela, cette languette (46) présente un trou oblong (47) et un trou cylindrique (48) qui peuvent coopérer avec un verrou (49) solidaire de pattes (50) du châssis (1). Ainsi, lorsque le verrou (49) passe à travers le trou oblong (47) la roue râteleuse peut pivoter d'un certain angle autour de l'axe d'articulation (43) afin de pouvoir suivre les dénivellations du sol. Par contre, lorsque le verrou (49) est engagé dans le trou cylindrique (48) la roue râteleuse est bloquée. Cette position est avantageuse pour le transport.

Dans cet exemple, l'extrémité inférieure de l'axe support (17) est également reliée au moyen d'un bras de liaison (30) à un appui (31) qui repose sur le sol durant le travail. Cet appui (31) est décalé vers l'arrière -vu dans la direction de déplacement A- par rapport à l'axe (17) et décalé latéralement par rapport à un plan vertical V qui est dirigé dans la direction de déplacement A et passe par l'axe support (17) (voir figure 4). Cet appui (31) est fixe par rapport au bras de liaison (30) dans le plan horizontal. Dans l'exemple représenté, l'appui (31) est constitué par une roulette qui roule sur le sol durant le travail.

On voit sur la figure 4 que, par rapport au plan V, l'appui se situe sur le côté vers lequel se déplacent les bras porte-outils (8) lorsqu'ils traversent ledit plan V sur la moitié arrière de leur trajectoire - vu dans le sens de déplacement A-. Dans l'exemple représenté, le décalage est obtenu au moyen d'une colonne (32) liant la roulette (31) au bras de liaison (30). Ce décalage pourrait également être obtenu par un léger pliage du bras de liaison (30). La valeur (d) du décalage latéral de la roulette (31) par rapport au plan V est d'environ 15 centimètres sur la machine représentée. Cette valeur (d) est telle que le moment du couple qu'exerce la roulette (31) sur l'axe support (17) durant le déplacement dans la direction A soit sensiblement égal au moment du couple exercé par les galets (13) des bras porte-outils (8) sur la came de commande (22). Etant donné que ce dernier couple peut varier d'un type de machine à l'autre en fonction de facteurs, tels que le nombre des bras porte- outils et des galets (13), la valeur (d) du décalage latéral peut également varier dans une fourchette comprise entre 10 et 20 centimètres ou même au-delà.

Deux appuis supplémentaires (35 et 36) sont également liés à l'axe support (17). Comme dans l'exemple précédent, ils sont constitués par des roulettes pivotantes situées à l'avant de l'axe support (17).

Durant le travail, la machine selon la figure 4 est tirée au moyen du tracteur (6) dans la direction A et la roue râteleuse (7) est entraînée en rotation dans le sens de la flèche F. L'appui (31) se place alors automatiquement derrière l'axe support (17) avec un léger décalage latéral par rapport au plan V. De ce fait, il exerce un couple sur l'axe support (17) qui est sensiblement égal à celui exercé par les galets (13) des bras porte-outils (8) sur la came de commande (22) qui est solidaire dudit axe (17). Les deux couples s'équilibrent de sorte que l'appui (31) puisse se déplacer aussi bien à l'encontre du sens de rotation F que dans ledit sens. Ceci lui permet d'assurer une orientation correcte de l'ensemble constitué par les appuis (31, 35, 36), l'axe support (17) et la came de commande (22) autour de l'axe géométrique (34) et de conserver une bonne stabilité à cet ensemble, même dans les terrains présentant des dénivellations à leur surface.

Ainsi, lorsque le tracteur (6) et la machine entrent dans une courbe ou un virage, l'appui arrière (31) s'oriente facilement dans la direction de déplacement. Simultanément, il fait pivoter l'axe support (17) autour de l'axe géométrique longitudinal (34) par l'intermédiaire du bras de liaison (30). Ledit axe support (17) déplace alors automatiquement la came de commande (22) qui est fixée sur lui. Celle-ci est ainsi également constamment orientée en fonction de la direction de déplacement. Par conséquent, la zone de dépose où se forme l'andain peut varier par rapport au châssis (1) de la machine afin de demeurer dans le voisinage du plan P qui est perpendiculaire à la direction de déplacement A. Cette zone de dépose reste ainsi constamment à l'emplacement idéal pour la formation d'un andain régulier et non disloqué.

Cette orientation automatique de la came de commande (22) est également obtenue lorsque la machine est utilisée à l'avant d'un tracteur ou bien en marche arrière pour éviter de faire demi-tour en bout de terrain.

L'orientation de la came de commande (22) telle que décrite ci-dessus est extrêmement simple et efficace. Elle s'effectue d'une manière continue sans interventions de la part de l'utilisateur.

Il est bien évident que l'invention n'est pas limitée aux modes de réalisation décrits et représentés sur les dessins annexés. Des modifications restent possibles, notamment du point de vue de la constitution des divers éléments, ou par substitution d'équivalents techniques, sans sortir pour autant du domaine de protection défini par les revendications.

## Revendications

1. Machine de fenaison comportant notamment un châssis (1) avec au moins une roue râteleuse (7) équipée de bras porte-outils (8) dirigés vers l'extérieur, laquelle roue râteleuse est guidée en rotation sur un axe support (17), qui est sensiblement vertical et qui est relié par un moyen de liaison (30) à au moins un appui (31) pouvant se déplacer sur le sol, cet appui étant décalé par rapport audit axe support dans le sens de déplacement (A ou B), lequel axe support (17) est muni d'une came (22) qui commande lesdits bras porte-outils par l'intermédiaire de galets (13) qui sont reliés à ces derniers, de telle sorte que lors de leur rotation autour de l'axe support (7) ils pivotent autour de leurs axes géométriques longitudinaux (42) respectifs afin qu'ils lèvent les outils de travail (11) dans une certaine zone de leur trajectoire, en vue de la dépose des produits râtelés sous la forme d'un andain, caractérisée par le fait que l'axe support (17) qui porte la came de commande (22) et l'appui (31) est libre en rotation par rapport au châssis (1), de manière à pouvoir tourner autour de son axe géométrique (34) et que l'appui (31) est fixe par rapport au moyen de liaison (30) dans le plan horizontal.

2. Machine selon la revendication 1, caractérisée par le fait que -vu dans le sens d'avancement A ou B- l'appui (31) se situe derrière l'axe support (17) de la roue râteleuse (7).

3. Machine selon la revendication 1 ou 2, caractérisée par le fait que l'axe support (17), la came de commande (22) et l'appui (31) sont rigidement liés entre eux et forment un ensemble pivotant autour de l'axe géométrique (34) dudit axe support (17).

4. Machine selon la revendication 1 ou 2, caractérisée par le fait que deux appuis supplémentaires (35, 36) reliés à l'axe support (17), se situent à l'avant de ce dernier -vu dans le sens d'avancement A ou B-.

5. Machine selon l'une quelconque des revendications précédentes, caractérisée par le fait que l'un au moins des appuis (31, 35, 36) de la roue râteleuse (7) est disposé de telle sorte que durant le travail il exerce un couple sur l'axe support (17) avec la came de commande (22) qui est sensiblement égal et opposé au couple exercé par les galets (13) des bras porte-outils (8) sur ladite came de commande (22) lorsque la roue râteleuse est entraînée en rotation.

6. Machine selon la revendication 5, caractérisée par le fait que l'appui (31) est en sus décalé latéralement par rapport à un plan vertical (V) dirigé dans la direction de déplacement (A) et passant par l'axe support (17).

7. Machine selon la revendication 6, caractérisée par le fait que par rapport au plan (V) l'appui (31) se situe du côté vers lequel se déplacent les bras porte-outils (8) lorsqu ils traversent ledit plan (V) sur la moitié arrière de leur trajectoire.

8. Machine selon la revendication 5, 6 ou 7, caractérisée par le fait que la valeur (d) du décalage latéral de l'appui (31) par rapport au plan (V) est telle que le moment du couple qu'exerce cet appui sur l'axe support (17), durant le déplacement, est sensiblement égal au moment du couple exercé par les galets (13) des bras porte-outils (8) sur la came de commande (22).

9. Machine selon la revendication 8, caractérisée par le fait que la valeur du décalage (d) est comprise entre 10 et 20 centimètres.

10. Machine selon l'une quelconque des revendications précédentes, caractérisée par le fait que la roue râteleuse (7) avec son axe support (17) et ses appuis (31, 35, 36) est articulée sur le châssis (1) au moyen d'une articulation (43) située près de l'extrémité supérieure dudit axe support (17).

## Claims

1. Haymaking machine comprising especially a frame (1) with at least one raking wheel (7) equiped with outwardly directed tool holding arms (8), said raking wheel is guided in rotation about a support axis (17) which is substantially vertical and is linked with a coupling means (30) to at least one rest (31) which can move on the ground, this rest being shifted with regard to the said support axis in the direction of displacement (A or B), said support axis (17) is provided with a cam (22) which drives said tool holding arms through rollers (13) which are linked to this latter, so that during their rotation about the support axis (17) they rotate around their respective longitudinal geometric axes (42) in order to lift the working tools (11) in a definite area of their trajectory, in view to lay down the raked products in the form of a swath, characterized in that the support axis (17) supporting the driving cam (22) and the rest (31) is free in rotation with regard to the frame (1), so as to be able to rotate around its geometric axis (34) and that the rest (31) is fixed with regard to the coupling means (30) in the horizontal plane.

2. Machine according to claim 1, characterized in that - seen in the direction of advance A or B - the rest (31) is located behind the support axis (17) of the raking wheel (7).

3. Machine according to claim 1 or 2, characterized in that the support axis (17), the driving cam (22) and the rest (31) are rigidly linked one to the other and form a unit rotating around the geometric axis (34) of said support axis (17).

4. Machine according to claim 1 or 2, characterized in that two additional rests (35, 36) linked to the support axis (17) are located in front of this latter - seen in the direction of advance A or B -.

5. Machine according to anyone of the preceding claims, characterized in that one at least of the rests (31, 35, 36) of the raking wheel (7) is arranged in such a manner that during work it exerts a torque on the support axis (17) with the driving cam (22) which is substantially equal and opposite to the torque exerted by the rollers (13) of the tool holding arms (8) on said driving cam (22) when the raking wheel is driven in rotation.

6. Machine according to claim 5, characterized in that the rest (31) is additionally laterally shifted with regard to the vertical plane (V) directed in the direction of displacement (A) and crossing the support axis (17).

7. Machine according to claim 6, characterized in that with regard to the plane (V) the rest (31) is located on the side to which the tool holding arms (8) displace when they cross said plane (V) in the rear half of their trajectory.

8. Machine according to claim 5, 6 or 7, characterized in that the value (d) of the lateral shift of the rest (31) with regard to the plane (V) is such that the moment of the torque exerted by this rest on the support axis (17), during the displacement, is substantially equal to the moment of the torque exerted by the rollers (13) of the tool holding arms (8) on the driving cam (22).

9. Machine according to claim 8, characterized in that the value of the displacement (d) is contained between 10 and 20 centimeters.

10. Machine according to anyone of the preceding claims, characterized in that the raking wheel (7) together with its support axis (17) and its rests (31, 35, 36) is articulated on the frame (1) by means of an articulation (43) located near to the upper end of said support axis (17).

**Patentansprüche**

1. Heuwerbungsmaschine, die insbesonders einen Rahmen (1) mit zumindest einem Rechrad (7) aufweist, das mit nach aussen gerichteten Werkzeugträgerarmen (8) versehen ist, welches Rechrad drehbar auf einer Tragachse (17) geführt ist, die im wesentlichen aufrechtstehend ist und die über ein Verbindungsmittel (30) mit zumindest einer Abstützung (31) verbunden ist, die sich auf dem Boden fortbewegen kann, welche Abstützung in bezug auf die Tragachse im Sinne der Fortbewegung (A oder B) versetzt ist, wobei die Tragachse (17) mit einer Kurve (22) versehen ist, die die Werkzeugträgerarme über Rollen (13), die mit den letzteren verbunden sind, derart steuert, dass sie bei ihrer Drehung um die Tragachse (17) um ihre jeweiligen geometrischen Längsachsen (42) schwenken, damit sie die Arbeitswerkzeuge (11) in einer gewissen Zone ihrer Bewegungsbahn anheben, um dort die gerechten Produkte in Form eines Schwads abzulegen, dadurch gekennzeichnet, dass die Tragachse (17), die die Steuerkurve (22) und die Abstützung (31) trägt, in bezug auf den Rahmen (1) frei drehbar ist, sodass sie um ihre geometrische Achse (34) drehen kann und dass die Abstützung (31) in bezug auf das Verbindungsmittel (30) in der horizontalen Ebene unbeweglich ist.

2. Maschine nach Anspruch 1, dadurch gekennzeichnet, dass sich - im Sinn der Fortbewegung A oder B betrachtet -die Abstützung (31) hinter der Stützachse (17) des Rechrades (7) befindet.

3. Maschine nach Anspruch 1 oder 2, dadurch gekennzeichnet, dass die Stützachse (17), die Steuerkurve (22) und die Abstützung (31) starr miteinander verbunden sind und eine Einheit bilden, die um die geometrische Achse (34) der Stützachse (17) schwenkt.

4. Maschine nach Anspruch 1 oder 2, dadurch gekennzeichnet, dass sich zwei mit der Stützachse (17) verbundene zusätzliche Abstützungen (35, 36) - im Sinne der Fortbewegung A oder B gesehen - vor der Stützachse befinden.

5. Maschine nach einem der vorhergehenden Ansprüche, dadurch gekennzeichnet, dass zumindest eine der Abstützungen (31, 35, 36) des Rechrades (7) derart angeordnet ist, dass sie im Betrieb ein Moment auf die Stützachse (17) mit der Steuerkurve (22) ausübt, das im wesentlichen gleich und entgegegesetzt gerichtet dem Moment ist, das die Rollen (13) der Werkzeugträgerarme (8) auf die Steuerkurve (22) ausüben, wenn das Rechrad in Drehung versetzt ist.

6. Maschine nach Anspruch 5, dadurch gekennzeichnet, dass die Abstützung (31) überdies seitlich in bezug auf eine in Fortbewegungsrichtung (A) gerichtete und durch die Stützachse (17) hindurchgehende Vertikalebene (V) versetzt ist.

7. Maschine nach Anspruch 6, dadurch gekennzeichnet, dass sich die Abstützung (31) in bezug auf die Ebene (V) auf der Seite befindet, gegen welche sich die Werkzeugträgerarme (8) bewegen, wenn sie die Ebene (V) auf der hinteren Hälfte ihrer Bewegungsbahn queren.

8. Maschine nach Anspruch 5, 6 oder 7, dadurch gekennzeichnet, dass der Wert (d) der seitlichen Versetzung der Abstützung (31) in bezug auf die Ebene (V) derart ist, dass das Drehmoment, das diese Abstützung auf die Stützachse (17) während der Fortbewegung ausübt, im wesentlichen gleich dem durch die Rollen (13) der Werkzeugträgerarme (8) auf die Steuerkurve (22) ausgeübten Drehmoment ist.

9. Maschine nach Anspruch 8, dadurch gekennzeichnet, dass der Wert der Versetzung (d) zwischen 10 und 20 Zentimeter liegt.

10. Maschine nach einem der vorhergehenden Ansprüche, dadurch gekennzeichnet, dass das Rechrad (7) mit seiner Stützachse (17) und seinen Abstützungen (31, 35, 36) auf dem Rahmen (1) mittels eines Gelenks (43) angelenkt ist, das sich nahe dem oberen Ende der Stützachse (17) befindet.

**Fig. 1**

Fig. 2

Fig. 3

Fig. 4

*Fig. 5*